# EUROPEAN PATENT APPLICATION

(11) **EP 2 905 220 A1**
(43) Date of publication of application: **12.08.2015**
(21) Application number: 15152879.1
(22) Date of filing: 28.01.2015
(51) Int. Cl.: B64C 1/06, B64C 3/18

(54) **Laminated I-blade stringer**

(30) Priority: 06.02.2014 US 201414174825
(71) Applicant: The Boeing Company, Chicago, IL 60606-2016 (US)
(72) Inventor: Tien, Allan, Chicago, IL Illinois 60606-2016 (US); Reusch, David C, Chicago, IL Illinois 60606-2016 (US); Hart, Marcus C, Chicago, IL Illinois 60606-2016 (US); Souksamane, Samson, Chicago, IL Illinois 60606-2016 (US)
(74) Representative: Boult Wade Tennant

(57) **Abstract**

A blade stringer (102) for a composite panel having an inside surface includes a proximal section, comprising a web (108) attached to and extending approximately perpendicularly from the inside surface of the panel, and a free distal end (112). The web has a thickness and a height, and includes a plurality of continuous composite plies. The free distal end has a plurality of local plies interleaved and co-cured with the continuous plies, the distal end defining a bulb (110) having a thickness that is greater than the web thickness and less than about a third of the web height.

## Description

### FIELD OF THE DISCLOSURE

The present disclosure relates to aircraft skin panels having attached stringers. More particularly, the present disclosure relates to a laminated I-blade stringer for a composite aircraft skin panel.

### BACKGROUND

Aircraft generally include an airframe, which may be regarded as an underlying skeleton, to which skin panels are attached to form a smooth aerodynamic outer surface. The wings also include an underlying structure covered with skin panels. Typically, skin panels are light and thin to minimize the weight of the aircraft and increase its payload and range. Since skin panels are thin, they are generally flexible and are often provided with stiffening to prevent undesired movement, flexing, and vibration during flight.

Aircraft skin panels are often provided with stringers to provide the desired stiffening. These stringers, sometimes also referred to as "frames," "stiffeners" or "flanges," are essentially upstanding ribs that are fixedly attached to the underside of the panel (also referred to as the "inner mold line" or IML of a composite panel) and are generally perpendicular to the plane of the panel. The stringers effectively take a flat panel with relatively low stiffness in bending, and substantially increase the bending stiffness. The ribs have the effect of greatly increasing the depth of the cross section of the panel, thus imparting significantly increased stiffness. These stringers can have a variety of cross-sectional shapes, including S shapes, I shapes, box or U shapes, straight or blade shapes, etc. The amount of additional stiffness that the stringer provides depends on its size, shape, thickness and the spacing of adjacent stringers.

Aircraft skin panels with stringers are used in both metal-skinned (e.g. aluminum) aircraft and aircraft of composite construction. In the case of aluminum aircraft, providing a skin panel with stringers generally involves attaching a flange of a metal structural shape to one side of the aircraft skin panel with rivets, adhesive or some other fastening method. The structural shape of the stringers can be a rolled or extruded section, for example.

In the case of composite aircraft, however, providing a skin panel with stringers is more complicated, given that the panel is a cured carbon fiber composite material, and elongated structural shapes of composite material are generally not produced using the same processes as those used for structural shapes of metal. Instead, structural shapes of composite material are generally produced by heat-curing several different plies of composite material together in a form that provides the desired shape, or by co-consolidated thermoplastic layers. These processes can involve many parts, and can be somewhat labor-intensive. Consequently, fabricating a composite skin panel with co-cured stringers of anything other than a blade shape involves significant time and complexity, which adds to the cost of aircraft.

The present disclosure is directed toward addressing one or more of the above issues.

### SUMMARY

It has been recognized that it would be desirable to have a composite skin panel for an aircraft that includes integral stringers that have a low part count.

It has also been recognized that it would be desirable to have a composite skin panel for an aircraft that includes integral stringers that have a high bending strength without the cost and complexity of I-section stringers.

In accordance with one embodiment thereof, the present disclosure provides a blade stringer for a composite panel having an inside surface. The blade stringer includes a proximal section, comprising a web attached to and extending approximately perpendicularly from the inside surface of the panel, and a free distal end. The web has a thickness and a height, and includes a plurality of continuous composite plies. The free distal end has a plurality of local plies interleaved and co-cured with the continuous plies, the distal end defining a bulb having a thickness that is greater than the web thickness and less than about a third of the web height.

In accordance with another embodiment thereof, the present disclosure provides a composite skin panel for an aircraft. The composite skin panel includes a panel of composite material, at least one blade stringer, extending approximately perpendicular to the skin panel, comprising a plurality of composite layers. The blade stringer has an intermediate web section, comprising plies of composite material and having a web height and a web thickness, and a bulb at a distal end of the web, comprising plies of composite material, the bulb having a bulb thickness that is greater than the web thickness and less than about one third the web height.

In accordance with yet another embodiment thereof, the present disclosure provides a method for fabricating a composite skin panel for an aircraft. The method includes providing a plurality of continuous composite plies in a stringer lay-up defining a proximal flange portion, an intermediate web portion, and a free distal end of a stringer. The method further includes interleaving a plurality of local composite plies between at least certain of the continuous composite plies in a region terminating at the distal end, forming a bulb at the distal end having a thickness that is greater than a thickness of the web portion. The method further includes curing the continuous composite plies and the local composite plies together to produce a unitary stringer having a proximal flange and a distal bulb.

Additional features and advantages of the present disclosure will be apparent from the detailed description that follows, taken in conjunction with the drawings.

### BRIEF DESCRIPTION OF THE DRAWINGS

FIG. 1 is a perspective view of an embodiment of a composite skin panel having a plurality of I-blade stringers in accordance with the present disclosure
FIG. 2 is a cutaway perspective view of an aircraft wing structure, showing the position and configuration of a wing skin panel having stringers.
FIG. 3 is a perspective view of a prior art wing skin panel having stringers with an I-section shape.
FIG. 4 is a perspective view of a prior art wing skin panel having stringers with a blade shape.
FIG. 5 is a cross-sectional view of a composite I-blade stringer in accordance with the present disclosure, showing the interleaved plies in the bulb section.
FIG. 6 is a perspective view of carbon fiber caul plates that can be used for fabricating a composite I-blade stringer in accordance with the present disclosure.
FIG. 7 is a cross-sectional view showing the orientation of the caul plates positioned around the carbon fiber plies of a composite I-blade stringer in accordance with the present disclosure.
FIG. 8 is a perspective view of a portion of a laminated I-blade stringer prior to curing.
FIG. 9 is a perspective view of an embodiment of a cured I-blade stringer and skin section in accordance with the present disclosure after curing and prior to trimming.
FIG. 10 is a cross-sectional view of a composite I-blade stringer in accordance with the present disclosure after trimming.

While the disclosure is susceptible to various modifications and alternative forms, specific embodiments have been shown by way of example in the drawings and will be described in detail herein. However, it should be understood that the disclosure is not intended to be limited to the particular forms disclosed. Rather, the intention is to cover all modifications, equivalents and alternatives falling within the spirit and scope of the invention as defined by the appended claims.

### DETAILED DESCRIPTION

While composite structures can be more efficient than metal structures in many ways, providing a composite aircraft skin panel with stringers involves different processes than doing so for a metal aircraft skin, due to the different processes and characteristics of composite material fabrication. The process can involve many parts, and can be somewhat labor-intensive, thus involving significant time and complexity, adding to the cost of the structure, such as an aircraft.

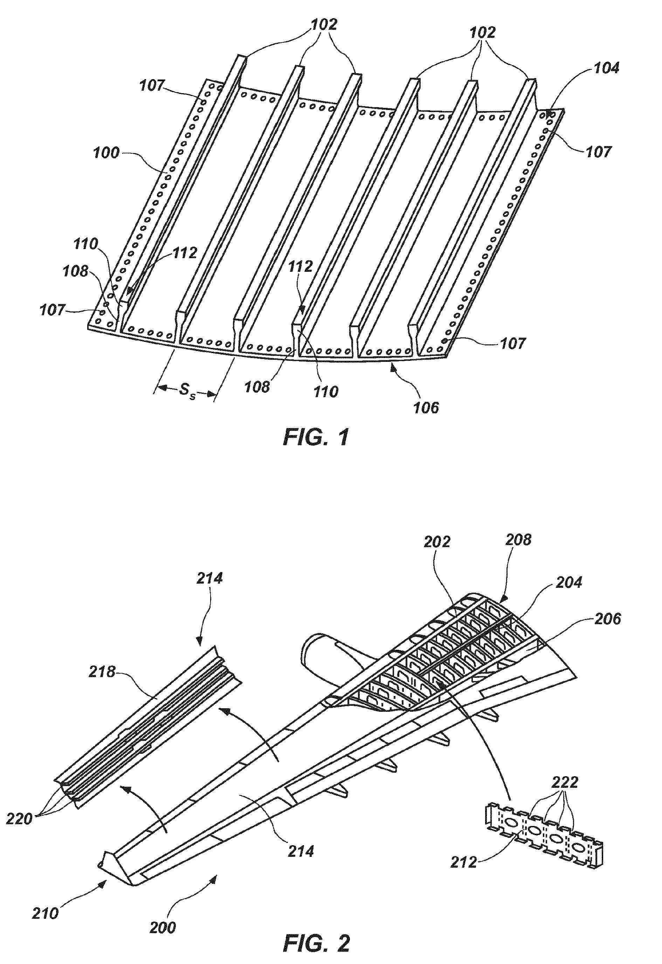

Advantageously, a composite skin panel having stringers and a method of making it have been developed that provides a significantly stiffened composite panel - which can be lighter, more efficient and cheaper than a comparable panel of metal materials-while reducing the complexity and labor associated with other methods for fabricating composite skin panels with stringers. Provided in FIG. 1 is a partial perspective view of one embodiment of a composite aircraft skin panel 100 having a plurality of integral I-blade stringers 102 in accordance with the present disclosure. The skin panel 100 is curved, and includes an inner surface 104 and an outer surface 106, and includes attachment points 107 for attachment of the panel to an aircraft structure. The I-blade stringers 102 are generally linear and aligned in a substantially parallel array extending from the inner surface 104. The I-blade stringers 102 each include an upstanding web portion 108 that stands generally perpendicular to the inner surface 104 of the skin panel 100, with a thickened bulb section 110 at the distal free end 112 of each stringer 102. While the skin panel 100 is curved, it is to be appreciated that the present disclosure is also applicable to stringers for panels that are not curved.

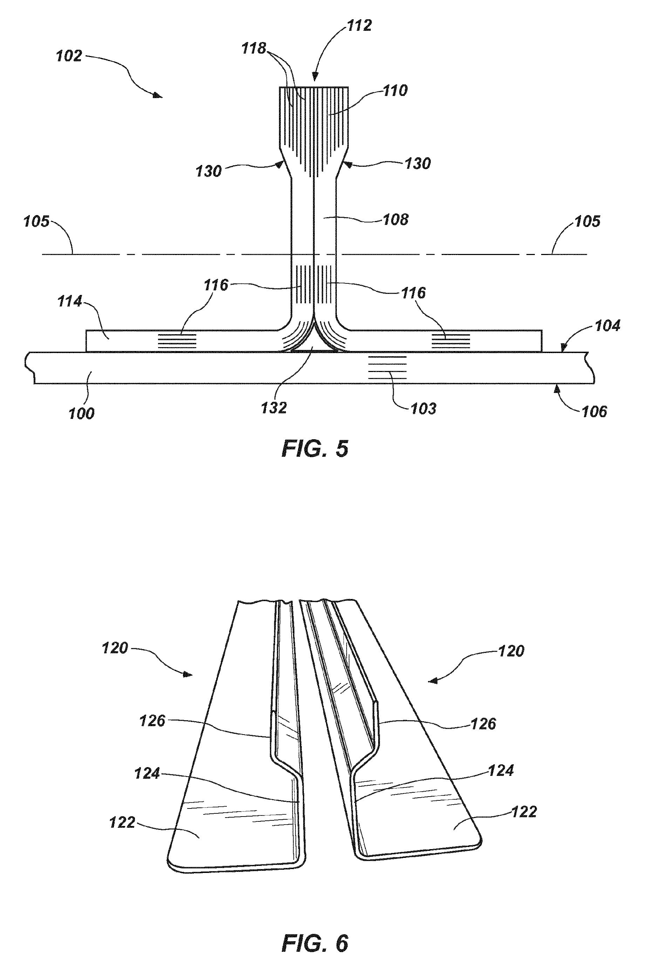

Those of skill in the art will appreciate that the upstanding stringers 102, being integrally attached to the relatively thin skin panel 100, have the effect of increasing the moment of inertia of the panel about its centroidal axis (105 in FIG. 5), and the provision of the thickened bulb section 110 in particular increases the moment of inertia of the stringer cross-section relative to a comparable stringer with no bulb section. This increased moment of inertia increases the strength of the combined panel and stringer assembly in bending about the centroidal axis (105 in FIG. 5) of the cross-section. This allows the production of a composite panel having a bending stiffness that would otherwise likely involve providing much taller blade stringers. Shorter stringers help allow more space for systems and payloads in an aircraft structure. In the discussion presented herein, the terms "stiffness" and "bending stiffness" are used interchangeably to refer to the bending strength of the stringers or the panel with stringers, depending on the context. Likewise, this disclosure interchangeably refers to increasing the "stiffness" or "bending stiffness" or "moment of inertia" of the panel and/or stringers. As used herein, the term "stability" generally has reference to resistance to buckling, and more specifically refers to the resistance of a structural member to lateral deformation caused by a compressive loading perpendicular to the direction of deformation.

Skin panels with stringers are generally known in aircraft manufacture. Shown in FIG. 2 is an exploded perspective view of a wing structure 200 of an aircraft. The wing structure includes a front spar 202, a center spar 204 and a rear spar 206, extending from the root 208 of the wing 200 to the wing tip 210. These wing spars 202, 204, 206 taper from the root to the tip of the wing 200, and have attached along their length a plurality of ribs 212. The ribs 212 are oriented generally perpendicularly to the wing spars 202, 204, 206, and have an outline that corresponds to the cross-sectional shape of the wing 200 at each rib location.

Attached to the wing ribs 212 are skin panels 214 that provide the finished shape and aerodynamic contour of the wing 200. Each skin panel 214 has a generally smooth outer surface 216, and is shaped for attachment to the aircraft structure in a given location. An exemplary skin panel 214 is shown detached from the wing 200 in FIG. 2 and turned over so that the inner surface 218 of this panel is visible. Disposed on the inner surface 218 of the wing panel are a plurality of stringers 220, oriented generally parallel to each other and generally parallel to the spars 202, 204, 206 of the wing 200. In the embodiment shown in FIG. 2 the ribs 212 include multiple cutouts 222 (also known by those of skill in the art as "mouse holes") around their periphery to allow for passage of the stringers 220, which run generally perpendicular to the ribs 212. As can be appreciated from the configuration of the ribs 212, it is anticipated that skin panels on most parts of the wing 200 - e.g. the top and bottom surfaces, and near the root 208 and near the tip 210 of the wing - will include stringers to increase their stiffness. The stringers 220 add significant stiffness to the relatively thin skin panels 214. Skin panels on other parts of an aircraft - e.g. the fuselage, etc. - can also include stringers to increase their strength. Another added benefit of stringers configured in accordance with this disclosure is that stringers that are structurally more efficient (e.g. shorter and/or thinner for a given strength) can allow the cutouts 222 to be smaller, thus allowing the ribs 212 to also be structurally more efficient.

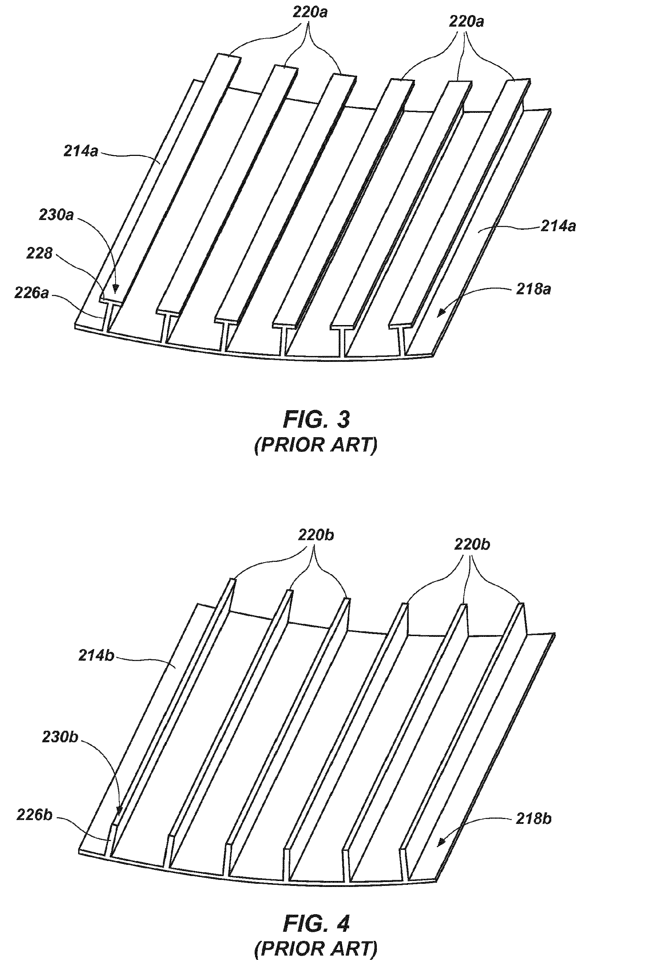

The stringers 220 can be configured in various ways. Shown in FIG. 3 is a perspective view of the inner surface 218a of one embodiment of a prior art skin panel 214a having stringers 220a with an I-section shape. That is, each stringer 220a includes a web portion 226a that stands up generally perpendicularly to the inner surface 218a of the panel 214a, with a distal flange 228 positioned at the free distal end 230a of each stringer 220a and oriented generally perpendicularly to the web portion 226a. This stringer configuration provides significant stiffness to the skin panel 214a. However, fabrication of this sort of skin panel using composite fabrication techniques is relatively complex. For example, a composite skin panel having I-section stringers like those shown in FIG. 3 can include 6 separate parts that are co-bonded to the wing skin to form each I-stringer. When this number is multiplied by the number of stringers on a given panel, it is easy to see how this results in a significant part count and significant labor in fabrication. Additionally, fabricating this configuration using composite materials and techniques typically involves placing longitudinal radius fillers (usually triangular in shape) between adjacent ply groups at each T-junction, which tend to increase part count and complexity in manufacturing, and can contribute to manufacturing defects.

As one alternative for providing stringers on a composite skin panel, trimmed blade section stringers have been used. Provided in FIG. 4 is a perspective view of an inner surface 218b of a prior art wing skin panel 214b having blade-type or straight stringers 220b. These stringers 220b each include a web portion 226b that stands up generally perpendicularly to the inner surface 218b of the panel 214b. Unlike the embodiment of FIG. 3, these stringers 220b do not include a bottom flange at their distal end 230b, but instead, the straight web portions 226b simply end at the distal end 230b. This stringer configuration includes fewer parts than the I-stringer configuration shown in FIG. 3, but provides less additional bending stiffness (i.e. has a lower moment of inertia) and stability to the skin panel 214b for a given overall height, thickness and spacing of stringers 220b than the embodiment of FIG. 3. This design is structurally less efficient compared to the I-stringer configuration shown in FIG. 3, and would require more material to obtain a comparable skin panel stiffness where the height of stringers is limited. That is, obtaining a comparable skin panel stiffness would involve either increasing stringer thickness, and/or adding more stringers per skin panel section (i.e. placing stringers at a closer spacing). Either of these approaches would increase the weight of the skin panel, thus at least partially negating some of the benefits of using a blade stringer in the first place.

Advantageously, the I-blade stringer 102 shown in FIG. 1 allows the fabrication of a composite skin panel that has almost the simplicity of a blade stringer, while providing significant additional stiffness and stability, like the I-section stringer, but with fewer parts and lower complexity. Many of the cost and simplification benefits of blade stringers apply to the I-blade stringer configuration, but structurally, the trimmed top I-blade stringer functions much like an I-section. It should thus be apparent that the term "I-blade" is used herein to denote that the cross-sectional shape of the stringer 102 has characteristics of both a blade stringer and an I-stringer. That is, the stringer 102 has a no bottom flange, like a blade stringer, but has and increased moment of inertia than a comparable blade stringer, like an I-stringer does. It is to be understood that other terms could be used to refer to this cross-sectional shape. For example, this shape could also be referred to as a "bulb-tee" section. Nevertheless, the term "I-blade" is used herein.

Provided in FIG. 5 is a cross-sectional view of a composite I-blade stringer 102 in accordance with the present disclosure, shown attached to a portion of a skin panel 100. This stringer 102 includes a flange 114 along the skin panel 100, a vertical web 108, and a web stabilizing bulb 110 on the free distal end 112 of the web 108. The skin panel 100 includes an inner surface 104 and an outer surface 106, and the I-blade stringers 102 extend generally perpendicularly from the inner surface 104. The I-blade stringer 102 includes a bottom flange 114 that is parallel with and bonded to the interior surface 104 of the skin panel 100, which is also comprised of a plurality of bonded plies 103. Each portion of the bottom flange 114 is a lay-up of multiple continuous layers or plies 116 of sheets of carbon fiber (e.g. woven or straight fibers), which are impregnated with resin material and laid atop each other, and cured together - i.e. exposed to heat while held within a form - with the entire stringer as a unit. The stringer 102 can be cured separately as a unit and then co-bonded to an already cured skin panel 100 in a second curing step. Alternatively, the stringer 102 and skin panel 100 can be co-cured together as a single unit. The continuous plies 116 forming opposing sides of the flange 114 curve upward together into the upstanding web portion 108. The lay-up of continuous plies 116 in each of the portions of the bottom flange 114 curve up against each other, where these lay-ups bond together, forming the web portion 108. Thus, the web portion 108 has a thickness that is essentially twice the thickness of each flange 114.

The continuous plies 116 of the flange and web portions continue to the distal end 112 of the stringer 102. However, the stringer includes a thickened bulb section 110 at its distal end, which is created by interleaving a plurality of local plies 118 between the continuous plies 116 to thicken this bulb section 110. The local plies 118 are added to the distal end 112 of the web 108 in a specific quantity and arrangement in order to increase the thickness and therefore the cross-sectional area of the distal end 112 of the web 108 a desired amount. This additional thickness at the distal end 112 increases the moment of inertia of the cross-section of the stringer 102, and thus greatly increases its bending stiffness and resistance to compression after impact.

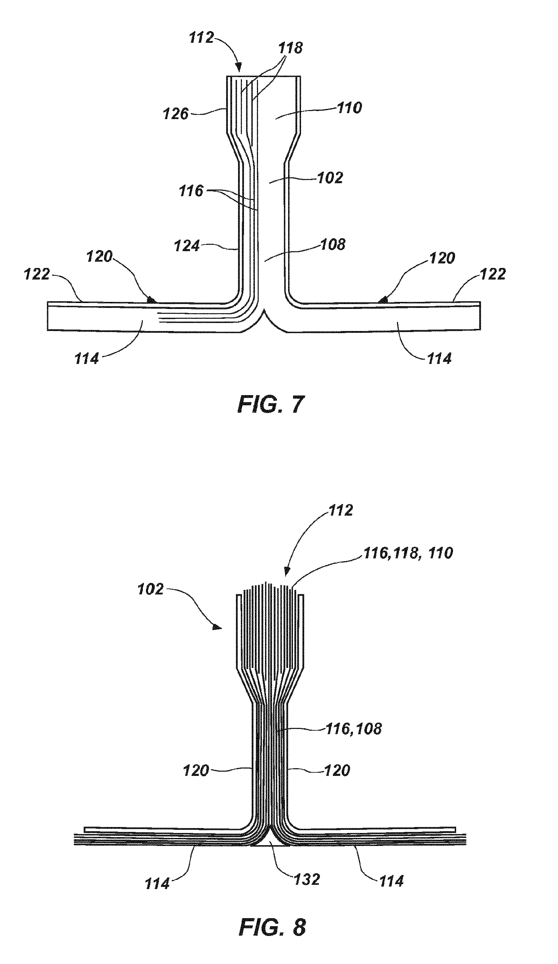

Advantageously, this particular stringer geometry can be achieved with current drape-forming or other manufacturing techniques. While the present disclosure suggests a drape-forming technique using only caul plates, it is to be understood that this is only one possible fabrication technique. While not illustrated herein, those of skill in the art will appreciate that drape-forming techniques typically involve placement of plies of carbon fiber composite material against a form or tool of some type, and securing and compressing these plies against the form and against each other with caul plates, clamps, etc. while the assembly is cured. It is also to be appreciated that drape-forming may not be the chosen method for production purposes, and any suitable method for producing a laminated composite part can be used. For example, a thermoplastic co-consolidation process could also be used. Shown in FIG. 6 is a perspective view of carbon fiber caul plates 120 that were used for fabricating a composite I-blade stringer 102 in accordance with the present disclosure. FIG. 7 provides a cross-sectional view showing the orientation of the caul plates 120 positioned around the carbon fiber plies 116, 118 of a composite I-blade stringer 102, and FIG. 8 provides a perspective view of a portion of a drape-formed I-blade stringer 102 sandwiched between the caul plates 120 prior to curing. The caul plates 120 each include a flange portion 122, a web portion 124, and a bulb portion 126, which correspond to the respective portions of the exterior shape of one side of the blade stringer 102.

In the drape-forming method illustrated herein, the plies 116, 118 of the flange and web sections, 114, 108, were draped against the caul plates 120 (without the use of a tool or form), which were then mechanically clamped together, and then clamped against the layup of plies 103 of the skin panel 100 with its forms, etc. (not shown). Referring again to FIG. 5, to provide a gradual taper from the web section 108 to the bulb 110, the local plies 118 are shorter (relative to the height of the web 108) toward the outside of the bulb 110 than they are toward the interior of the bulb 110. This provides a tapered outer surface 130 in the transition region from the web 108 to the bulb 110.

The number of additional local plies 118 relative to the number of continuous plies 116 can vary. In one embodiment, the number of additional local plies 118 is less than the number of continuous plies 116, so that the local plies 118 are interspersed less than between every continuous ply, at least for a portion of the cross-section of the bulb 110. In another embodiment, the number of additional local plies 118 is approximately equal to the number of continuous plies 116, so that the local plies 118 are interspersed between each pair or nearly every pair of continuous plies 116. The number of additional local plies 118 could also be greater than the number of continuous plies 116. Where the local plies 118 and continuous plies 116 are of a common thickness, this latter configuration will produce a bulb 110 that is approximately twice as thick as the web 108. Alternatively, the local plies 118 can have a thickness that is different than (i.e. greater than or less than) the thickness of the continuous plies 116. Moreover, as will be appreciated by those of skill in the art, either or both the continuous plies 116 and local plies 118 can be of various thicknesses. Various configurations for the number of local plies 118 and the ply thicknesses can also be used.

As will be appreciated by those of skill in the art, the I-blade stringer 102 shown herein also includes a T-section at the junction of the flanges 114 and the web 108. During lay-up of the plies for this stringer, a radius filler 132 can be placed within the small space at the root of the web 108. This radius filler 132 has a generally triangular shape, and can be of various materials, such as carbon fiber (e.g. woven or unwoven) and resin material, or a metal, such as titanium, with a suitable adhesive (e.g. resinous material). The shape and material of the radius filler 132 are selected to fill the space at the root of the web 108, and to bond to the composite material of the stringer 102 and the skin panel 100, and can also transfer loads between the adjacent portions of the stringer and skin panel, depending on the material of the radius filler. Advantageously, this configuration of the I-blade stringer 102 does not include a radius filler at the distal end of the stringer section, since there is no distal end flange as there is in an I-stringer. Reducing the use of radius fillers helps reduce part count and complexity of manufacturing, reduces the likelihood of manufacturing defects, and can improve the thermal stability of the part during curing. While a T-section stringer is shown and described herein, it will also be appreciated that an I-blade stringer having an L-section and a single flange, rather than a pair of flanges 114, can also be configured in accordance with this disclosure.

Providing the bulb 110 on the distal end 112 of the web 108 with interleaved local plies 118 allows for stabilization of the distal end 112 without adding a radius feature to the in-plane reinforcing fibers of the continuous plies 116, such as the 90° radius required to add the distal flange to the "I"-stringers of FIG. 3. This configuration helps to reduce complexity of the stringer, and can also help to reduce various failure modes. The bulb 110 also allows the I-blade stringer 102 to be configured with fewer continuous plies 116 of composite material compared to an equivalent straight blade stringer having no bulb. The interspersed local plies 118 provide relatively low inter-laminar stresses in the region of the bulb 110, and provide increased stability of the web 108 relative to a straight blade shape while using a smaller number of continuous plies 116.

After the lay-up of plies for the stringer 102 and for the skin panel 100 are clamped to their respective forms, the entire lay-up assembly is placed within an autoclave and cured together (i.e. "co-cured"), causing the composite resin to impregnate and bond all of the carbon fiber plies together into a generally unitary or integral structure. Advantageously, the I-blade configuration has been found to exhibit good thermal characteristics through the curing and cool-down phases.

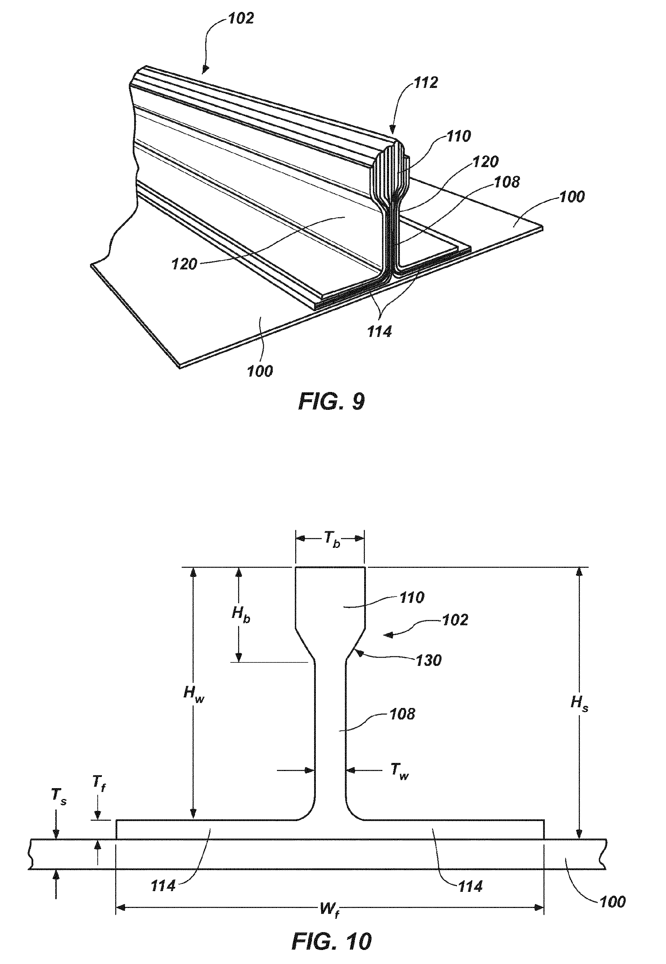

After the composite lay-up is cured and cooled, the entire assembly is removed from the autoclave and all of the forms, cauls and clamps can be removed from it. At this point, the raw cured assembly is ready to be further machined or processed in various ways to become a finished product. This can include trimming, cutting, shaping, milling, deburring, etc. to produce the finished shape and configuration. Shown in FIG. 9 is a perspective view of an embodiment of a cured I-blade stringer 102 and skin section 100 in accordance with the present disclosure, after curing and prior to trimming. As the views of FIGs. 8 and 9 show, the continuous plies 116 can be relatively well aligned at the proximal edges 126 of the flanges 114, so that little or no trimming is needed in this location. However, to ensure that the continuous plies 116 and local plies 118 have sufficient length, these plies can extend past the distal end 112 of the stringer when it is initially laid up. After curing, the distal end 112 of the stringer 102 can be trimmed to produce the uniform and square-ended configuration shown in FIG. 10 or any other desired shape, such as rounded, angled, parabolic, etc.

The dimensions of the I-blade stringer 102 can vary widely. The cross-sectional view of FIG. 10 shows various generic dimensions of the stringer 102. In this view, the thickness of the bulb 110 is designated T_{b}, the thickness of the web 108 is T_{w}, and the thickness of the flange portions 114 is T_{f}. The overall width of the flange is W_{f}. The overall height of the stringer is Hₛ. The height of the web, including the bulb 110, is H_{w} and the height of the bulb 110, including the height of the transition taper 130, is H_{b}. In general, it is believed to be desirable that the bulb 110 has a thickness T_{b} that is greater than the web thickness T_{w}, but less than one third the web height H_{w}. In one exemplary embodiment, the web height H_{w} is from about 2" to 10" and the web thickness T_{w} ranges from about 0.040" to about 1". It will be apparent that the web thickness T_{w} is twice the flange thickness T_{f}. The flange width W_{f} can be from about 2" to about 8". The height of the bulb H_{b} can be a function of the thickness T_{b} of the bulb 110 and the thickness T_{w} of the web 108. In one embodiment, the maximum value of H_{b} is about 1/3(H_{w}), and the minimum value of H_{b} is about 7.5*(T_{b}-T_{w}). This minimum is 1.5 times a 10:1 transition taper angle, times half of the total increase in thickness. Other proportions and can also be used. The thickness of the skin, Tₛ, can be any thickness. That is, for fabrication purposes, the dimensions of the stringers 102 are not dependent upon the thickness of the skin 100, and a stringer of almost any dimensional configuration can theoretically be used with skin of any thickness. It is to be understood that the above dimensions are exemplary only, and other dimensions can also be used.

In one particular example that has been fabricated and tested, the overall height of the stringer Hₛ was 3-3/8", the web height H_{w} was 3" and the bulb 110 had a thickness T_{b} of 13/16". In this embodiment, the web thickness T_{w} was 3/8" and the flange thickness T_{f} was 3/16", while the overall flange width W_{f} was 5-1/8". In this particular example, the bulb height H_{b} was 1-3/16" and the length of the bulb taper 130 was ½". In this particular embodiment, the web 108 included a total of 50 continuous plies of composite material, with 56 local plies added to create the bulb 110. These local plies had a height of from ¾" to 1-1/4". Again, it is to be understood that the above dimensions are exemplary only, and other dimensions can also be used.

It will be apparent that the dimensions of an I-blade stringer in accordance with the present disclosure in a particular application will likely depend at least in part on the spacing of adjacent stringers. Viewing FIG. 1, the stringers 102 are substantially parallel to each other, and spaced at a spacing Sₛ. It is believed that stringer spacings Sₛ of from 5" to 15" can be used. The spacing that is desired in any given situation can depend on the particular skin panel that is at issue and the aerodynamic loading that the skin panel will experience, as well as other factors, such as the thickness, shape and curvature of the panel, and the geometric and spatial constraints on the size of the stringers.

The I-blade stringer disclosed herein provides a stringer for a composite panel that includes a flange 114 along the panel 100, a vertical web 108, and a web stabilizing bulb 110 on the free distal end 112 of the web. While the I-blade stringer disclosed herein is presented in the context of an aircraft skin panel, it is not limited to this application. This disclosure is applicable to panels of many different types and for many different applications. A skin panel configured in accordance with this disclosure can be used for wing or fuselage panels, or in other parts of an aircraft. This stringer configuration functions somewhat like an I-section attached to the skin of an aircraft, and provides improved bending stiffness and web stability compared to a blade-type stringer, while retaining much of the cost savings in manufacture that the blade stringer provides. This configuration thus adapts desirable features from both I-section and blade-type stringers. It can take the place of an I-section, but includes fewer parts while still providing improved bending stiffness and web stability. The I-blade stringer may also reduce the number of stringers required for a given skin panel area to support bending stiffness, when compared with blade stringers of comparable dimensions. This stringer configuration, having a bulb at its distal end, also provides good resistance to buckling under compressive loading. Advantageously, the I-blade stringer does not include a radius feature at the distal end of the web, which helps to reduce the part count for composite skin panel fabrication. This helps to reduce the tooling that is involved in skin panel fabrication, and thus provides a cost saving.
Clause A. A blade stringer for a composite panel having an inside surface, comprising: a proximal section, comprising a web attached to and extending approximately perpendicularly from the inside surface of the panel, the web having a web thickness and a web height, and including a plurality of continuous composite plies; and a free distal end, having a plurality of local plies interleaved and co-cured with the continuous plies, the local plies being substantially parallel to the continuous composite plies of the web, the distal end defining a bulb having a thickness that is greater than the web thickness and less than about a third of the web height.
Clause B. A blade stringer in accordance with clause A, further comprising a proximal flange, attaching the web to the panel.
Clause C. A blade stringer in accordance with clause B, wherein the proximal flange has a width of from about 2" to about 8".
Clause D. A blade stringer in accordance with clause B, wherein the proximal flange has a thickness of from about 0.02" to about 0.5".
Clause E. A blade stringer in accordance with clause A, wherein the bulb has a thickness that is greater than about 0.04" and less than 3-1/3".
Clause F. A blade stringer in accordance with clause A, wherein the bulb has a height that is not less than 7.5 times a thickness of the bulb minus a thickness of the web, and not greater than one third of a height of the web.
Clause G. A blade stringer in accordance with clause A, wherein the web height is from about 2" to 10", and the web thickness is from about 0.04" to about 1".
Clause H. A blade stringer in accordance with clause A, wherein the plurality of local plies and the plurality of continuous plies are of approximately equal number, the local plies being interleaved between approximately every other continuous ply.
Clause I. A blade stringer in accordance with clause A, wherein the local plies that are positioned toward an outside of the bulb have a smaller length relative to the height of the web, than the local plies that are positioned toward an interior of the bulb.
Clause J. A blade stringer in accordance with clause A, wherein the blade stringer is positioned approximately 5" to 15" from, and substantially parallel to, an adjacent blade stringer of the panel.
Clause K. A composite skin panel for an aircraft, comprising:
   a panel of composite material; at least one blade stringer, extending approximately perpendicular to the skin panel, comprising a plurality of composite layers, and having an intermediate web section, comprising plies of composite material and having a web height and a web thickness; and a bulb at a distal end of the web, comprising plies of composite material, the bulb having a bulb thickness that is greater than the web thickness and less than about one third the web height.
Clause L. A composite skin panel in accordance with clause K, wherein the panel of composite material has a curved shape, and includes attachment points for attachment of the panel to an aircraft structure.
Clause M. A composite skin panel in accordance with clause K, wherein the web height is from about 2" to 10", and the web thickness is from about 0.04" to about 1".
Clause N. A composite skin panel in accordance with clause K, further comprising a proximal flange, attaching the web to the skin panel, the proximal flange having a width of about 2" to about 8", and a thickness of about 0.02" to 0.5".
Clause O. A composite skin panel in accordance with clause K, wherein the panel of composite material includes a plurality of substantially parallel blade stringers, each blade stringer spaced approximately 5" to 15" from an adjacent blade stringer.
Clause P. A composite skin panel in accordance with clause K, wherein the web section includes a plurality of continuous composite plies co-cured with the skin panel, and the bulb includes a plurality of local plies interleaved and co-cured with the continuous plies.
Clause Q. A composite skin panel in accordance with clause P, wherein the local plies that are positioned toward an outside of the bulb have a smaller length relative to the height of the web, than the local plies that are positioned toward an interior of the bulb.
Clause R. A method for fabricating a composite skin panel for an aircraft, comprising: providing a plurality of continuous composite plies in a stringer lay-up defining a proximal flange portion, an intermediate web portion, and a free distal end of a stringer; interleaving a plurality of local composite plies between at least certain of the continuous composite plies in a region terminating at the distal end, forming a bulb at the distal end having a thickness that is greater than a thickness of the web portion; and curing the continuous composite plies and the local composite plies together to produce a unitary stringer having a proximal flange and a distal bulb.
Clause S. A method in accordance with clause R, wherein interleaving the plurality of local composite plies between at least certain of the continuous composite plies comprises interleaving local plies having a smaller height relative to a height of the web toward an outside of the bulb, and interleaving local plies having a greater height relative to the height of the web toward an interior of the bulb.
Clause T. A method in accordance with clause R, wherein the step of curing the continuous composite plies and the local composite plies comprises co-curing the continuous composite plies and the local composite plies with a composite skin panel, the flange portion disposed in abutting relationship to the composite skin panel, to produce a unitary composite skin panel with an integral stringer.
Clause U. A method in accordance with clause R, further comprising trimming the distal end of the stringer to define a substantially squared end.

Although various embodiments have been shown and described, the present disclosure is not so limited and will be understood to include all such modifications and variations are would be apparent to one skilled in the art.

## Claims

1. A blade stringer (102) for a composite panel having an inside surface, comprising:
a proximal section, comprising a web (108) attached to and extending approximately perpendicularly from the inside surface (104) of the panel (100), the web (108) having a web thickness and a web height, and including a plurality of continuous composite plies; and
a free distal end (112), having a plurality of local plies interleaved and co-cured with the continuous plies, the local plies being substantially parallel to the continuous composite plies of the web (108), the distal end defining a bulb (110) having a thickness that is greater than the web thickness and less than about a third of the web height.

2. A blade stringer (102) in accordance with claim 1, further comprising a proximal flange, attaching the web (108) to the panel (100).

3. A blade stringer (102) in accordance with claim 2, wherein the proximal flange has a width of from about 2" to about 8".

4. A blade stringer (102) in accordance with claim 2, wherein the proximal flange has a thickness of from about 0.02" to about 0.5".

5. A blade stringer (102) in accordance with claim 1, wherein the bulb (110) has a thickness that is greater than about 0.04" and less than 3-1/3".

6. A blade stringer (102) in accordance with claim 1, wherein the bulb (110) has a height that is not less than 7.5 times a thickness of the bulb minus a thickness of the web, and not greater than one third of a height of the web.

7. A blade stringer (102) in accordance with claim 1, wherein the web height is from about 2" to 10", and the web thickness is from about 0.04" to about 1".

8. A blade stringer (102) in accordance with claim 1, wherein the plurality of local plies and the plurality of continuous plies are of approximately equal number, the local plies being interleaved between approximately every other continuous ply.

9. A blade stringer (102) in accordance with claim 1, wherein the local plies that are positioned toward an outside of the bulb have a smaller length relative to the height of the web, than the local plies that are positioned toward an interior of the bulb (110).

10. A blade stringer (102) in accordance with claim 1, wherein the blade stringer (102) is positioned approximately 5" to 15" from, and substantially parallel to, an adjacent blade stringer of the panel (100).

11. A method for fabricating a composite skin panel (100) for an aircraft, comprising:
providing a plurality of continuous composite plies in a stringer lay-up defining a proximal flange portion, an intermediate web portion, and a free distal end (112) of a stringer;
interleaving a plurality of local composite plies between at least certain of the continuous composite plies in a region terminating at the distal end, forming a bulb (110) at the distal end having a thickness that is greater than a thickness of the web portion; and
curing the continuous composite plies and the local composite plies together to produce a unitary stringer having a proximal flange and a distal bulb.

12. A method in accordance with claim 11, wherein interleaving the plurality of local composite plies between at least certain of the continuous composite plies comprises interleaving local plies having a smaller height relative to a height of the web toward an outside of the bulb (110), and interleaving local plies having a greater height relative to the height of the web toward an interior of the bulb (110).

13. A method in accordance with claim 11, wherein the step of curing the continuous composite plies and the local composite plies comprises co-curing the continuous composite plies and the local composite plies with a composite skin panel (100), the flange portion disposed in abutting relationship to the composite skin panel (100), to produce a unitary composite skin panel (100) with an integral stringer.

14. A method in accordance with claim 11, further comprising trimming the distal end of the stringer to define a substantially squared end.
